# EUROPEAN PATENT APPLICATION

(11) **EP 3 616 912 A1**
(43) Date of publication of application: **04.03.2020**
(21) Application number: 19202678.9
(22) Date of filing: 01.06.2012
(51) Int. Cl.: B32B 27/32, B65B 11/48, B65D 85/10, B65D 71/08

(54) **METHOD FOR FORMING NAKED COLLATION PACKAGES AND PACKAGE**

(30) Priority: 02.06.2011 GB 201109256
(62) Divisional of application: 12727903.2
(71) Applicant: Innovia Films Limited, Wigton, Cumbria CA7 9BG (GB)
(72) Inventor: SINGH, Shalendra, Wigton, Cumbria CA7 9BG (GB)
(74) Representative: TL Brand & Co

(57) **Abstract**

The present invention provides a method for forming a naked collation package comprising a) providing an arrangement of packages individually wrapped in a filmic material; b) providing a naked collation film for nakedly wrapping said individually wrapped packages, the naked collation film comprising a polyoiefinic core layer C, an inner sealing layer A on the inner surface of the naked collation film and a polyoiefinic outer sealing layer B on the outer surface of the naked collation film, the material of the inner sealing layer A being selected for sealing incompatibility with the filmic material of the individually wrapped packages under a specified sealing condition and heat shrinking condition, and the polyoiefinic material of the outer sealing layer B being selected for sealing compatibility with B and for sealing compatibility with A under the specified sealing condition, wherein layers A and B are formed of different materials and layer B comprises at feast one polyoiefinic polymer and an antiblock component comprising at feast 0.2% by weight of the layer of silicone; c) arranging the individually wrapped packages in an ordered configuration; d) arranging the naked collation film such that it at feast partially surrounds, although is not necessarily in contact with, the ordered configuration of individually wrapped packages; and e) heat shrinking the naked collation film by exposing it to the heat shrinking condition, causing the naked collation film to shrink and closely surround the arrangement of packages, without being sealed to the packages. Naked collation film wrapped packages are also disclosed.

## Description

The present invention relates to a method for producing naked collation packages, and also to such packages themselves.

The present invention is primarily concerned with overwrap films for naked collation. Naked collation is an effective way to reduce packaging costs and materials. When a number of individually packaged articles (cigarette packs, for example) are to be grouped together and packaged as a larger bundle for distribution or for bulk retail, it is usual for the individual packages to be placed in a larger box or carton, before then being wrapped. Naked collation eliminates the need for the box or carton.

However, one of the problems of naked collation in film wrapping is that in generating the collated package it is necessary to seal the film package. This raises the prospect of the collated package film sealing not only to itself but also to the film used to wrap each individual packet.

In the cigarette industry, wherein the individual packs tend to be wrapped in polypropylene film, this is a particular problem. The manufacturer would often prefer to use polypropylene film for its collated bundle, taking advantage of the favourable optical and mechanical properties of such films, but in that case risks sealing the collation film also to the film of the individual packs.

Such problems have in the past been addressed by providing the polypropylenic overwrap film for naked collation with an acrylic coating, which seals well to itself but not to the polypropylene wrapping of the individual packs. However, acrylic coatings add cost to the film manufacturing process, both in terms of the material used to provide the coating and, perhaps more importantly, in necessitating a coating operation following extrusion of the film.

WO 03/089336 discloses a method of packing packets of cigarettes wherein an ordered group of individual packets is packed solely in a sheet of transparent heat-seal plastic packing material, which is folded about the ordered group to form a tubular wrapping. A girth seal is then provided to seal the tube, and envelope seals at each end of the package.

US Patent No. 6358579 discloses another naked collation type packaging wherein the packaging film is a polyolefin film with modified polyolefinic sealable layers. The sealable outer layers comprise copolyester and the combined film is said to seal to itself, but not to the biaxially oriented polypropylene films of the individual packages.

While the approaches disclosed in WO 03/089336 and US 6358579 address the problem of the naked collation film becoming sealed to the filmic wrap of the individual products, additional challenges are faced.

More specifically, once a bundle of products have been wrapped in a naked collation film, the wrapped bundle will tend to have residual heat from the wrapping process. The bundle may have been heated during heat-sealing of the naked collation film. Additionally or alternatively, the bundle may have been heated by heat shrink apparatus, if used, to heat shrink the naked collation film around the bundle.

Following completion of the wrapping process, it is generally desirable to locate the wrapped bundles adjacent to each other and / or move them past each other, for example when packing them into containers for shipping. However, if such steps are performed while the bundles have residual heat, this may cause some degree of sticking or blocking to occur between the naked collation wrappers of adjacent bundles or between the heated bundles and components of packing machines.

Certain techniques and additives to improve the hot slip properties of films will be known to those skilled in the art. However, their use is invariably accompanied by an reduction in film quality. For example, their use is typically accompanied by an increase in the seal initiation temperature of the film in question. The increase in seal initiation temperature is problematic as the likelihood of the naked collation film becoming sealed to the individual filmic wraps of the products in the bundle is increased. Additionally, maintaining the heat seal apparatus at higher temperatures requires a greater amount of energy, increasing cost.

One type of additive conventionally added to films to improve their slip properties are silicones. However, it has been observed that the use of silicones in significant amounts is accompanied by a number of deleterious changes in the properties of the films to which they are added, which renders those films unsuitable for use as shrinkable naked collation films. In this connection, reference is made to Figures 6 and 7 of US4343852, which teach that the use of over 0.15% by weight of the copolymers present in the sealing layer of silicone results in an unacceptable reduction in heat-seal strength and seal-packaging grade as well as an unacceptable increase in haze.

It is an object of the present invention to provide an improved method for producing naked collation packages which exhibit improved hot slip properties without an unacceptable increase in seal initiation temperature, tackiness and / or a decrease in optical properties.

Thus, according to a first aspect of the present invention, there is provided a method for forming a naked collation package comprising a) providing an arrangement of packages individually wrapped in a filmic material; b) providing a naked collation film for nakedly wrapping said individually wrapped packages, the naked collation film comprising a polyolefinic core layer C, an inner sealing layer A on the inner surface of the naked collation film and a polyolefinic outer sealing layer B on the outer surface of the naked collation film, the material of the inner sealing layer A being selected for sealing incompatibility with the filmic material of the individually wrapped packages under a specified sealing condition and a heat shrinking condition, and the polyolefinic material of the outer sealing layer B being selected for sealing compatibility with B and for sealing compatibility with A under the specified sealing condition, wherein layers A and B are formed of different materials and layer B comprises at least one polyolefinic polymer and an antiblock component comprising at least 0.2% by weight of the layer of silicone; c) arranging the individually wrapped packages in an ordered configuration; d) arranging the naked collation film such that it at least partially surrounds, although is not necessarily in contact with, the ordered configuration of individually wrapped packages; and e) heat shrinking the naked collation film by exposing it to the heat shrinking condition, causing the naked collation film to shrink and closely surround the arrangement of packages, without being sealed to the packages.

It has surprisingly been found that the use of silicone in amounts equal to or greater than 0.2% by weight of the outer layer of the film results in a naked collation film which exhibits good antislip properties at elevated temperatures while simultaneously exhibiting strong optical properties and an advantageously low seal initiation temperature.

It is important to note that the films used in the process of the present invention have a general ACB structure, where the inner sealing layer A and outer sealing layer B are formed of different materials, as opposed to films with an ACA structure where the inner and outer sealing layers are formed of the same material.

For the avoidance of doubt, the term 'closely surround', is used to encompass embodiments where the arrangement of packages is totally surrounded, or alternatively, where the arrangement of packages is partially surrounded by the shrunk naked collation film. For example, where the arrangement of packages has six faces (e.g. in a 2 x 5 stack of cigarette packets), the naked collation film may closely surround four of those six faces.

The term 'closely surround' is used to convey that the individual packages are tightly wrapped by the naked collation film and will generally be in intimate contact with that film.

The method of the present invention can include one of more of the following steps, which can be performed before or after any of steps a) to d), if appropriate.
a-1) forming a film tube with overlapping edges;
a-2) forming a girth seal by sealing together the overlapping edges of a film tube;
a-3) forming envelope seals at each end of the package by folding in a film tube and sealing the folded ends.

Step a-1) above may be performed by wrapping the naked collation film around the ordered configuration of individually wrapped packages to form the film tube.

The tube, the ends of which are sealed in step a-3), may be formed by the girth seal formed in step a-2) or by sealing the tube formed in step a-1) in some other way. Alternatively, the naked collation film may be supplied as a pre-formed tube.

Preferably any girth seal which is formed is formed A to B. The envelope seals, if formed, may be formed B to B and/or A to B and/or A to A, and combinations of two or more thereof.

As mentioned above, the films used in the process of the present invention exhibit good optical properties, such as an acceptable level of transparency, which render them suitable for use as naked collation films. More specifically, the naked collation film preferably exhibits a wide angle haze value of about 15.0% or lower, about 10.0% or lower, about 5.0% or lower, about 3.0% or lower, about 2.5% or lower, about 2.0% or lower, about 1.8% or lower, about 1.6% or lower, about 1.4% or lower, about 1.2% or lower or about 1% or lower.

The wide angle haze (WAH) of a film is the percentage of transmitted light which is passed through the film which deviates from the incident beam by more than 2.5 degrees of forward scattering. Measurements of WAH of films may be made using an E.EL Spherical Haze Meter. The test method is described in ASTM D1003.

Additionally or alternatively, the naked collation film employed in the process of the present invention preferably exhibits a narrow angle haze value of about 3.0% or lower, about 2.5% or lower, about 2.0% or lower, about 1.5% or lower, or about 1% or lower.

The narrow angle haze (NAH) of a film is the amount of parallel light which is scattered by more than 6 minutes (0.1°) of arc when passing through the film sample from the incident beam. NAH is measured as a percentage of the total light transmitted through the film. The measurement of NAH of films may be made using laser narrow angle haze machines.

Additionally or alternatively, the naked collation film employed in the process of the present invention preferably exhibits a gloss (45°) of about 95% or higher, about 96% or higher, about 97% or higher, about 98% or higher, or about 99% or higher.

Surface or specular gloss is the ratio of the luminous flux reflected from, to that incident on, the sample being measured for specified solid angles at the specular direction i.e. the angles of incidence and reflection are equal. Where reference is made to gloss (45°) values, the angle used is 45°. The test method is described in ASTM D2457. The measurement of surface gloss of films may be made using a Novo gloss glossmeter with a rho point of 45°.

The films employed in the method of the present invention exhibit an advantageously low seal initiation temperature. This enables seals (including the girth and / or envelope seals, if formed) to be formed between different parts of the naked collation film (e.g. between layers A and A, A and B and / or B and B) at a heat sealing condition (e.g. at 5psi with a 0.5s dwell time) where the temperature is about 95°C or lower, about 90°C or lower, about 85°C or lower, about 80°C or lower or about 75°C or lower. In preferred embodiments, the films of the present invention can form seals having a seal strength of 200g/25mm when sealed at the temperatures mentioned above at a pressure of 5psi and a dwell time of 0.5s. In other preferred embodiments, the films of the present invention can form seals having a seal strength of 200g/25mm when sealed at temperatures between about 80°C and about 120°C and at a pressure of 0.5psi and a dwell time of 0.15s.

The sealing condition may comprise conditions of elevated pressure and dwell time. Typically, where a film exhibits high seal initiation temperatures, pressure and / or dwell time are increased to ensure that a viable seal is formed. However, as a result of the advantageously low seal initiation temperatures of the films employed in the process of the present invention, shorter dwell times and lower pressures are required, enabling seals to be formed more rapidly.

The sealing pressure will typically be from at least about 0.1psi, about 0.2, about 0.5 or about 1 to about 5, about 10, about 20, or about 25psi, for example. Dwell times may be selected in accordance with well-known principles and will generally be from at least about 0.05s, about 0.075s, or about 0.1s to about 0.5s, about 1s, or about 2s.

The films used in the process of the present invention exhibit good antislip properties and preferably exhibit a static and / or dynamic coefficient of friction at ambient temperatures of about 0.5 or lower, about 0.4 or lower, about 0.3 or lower, about 0.25 or lower, or about 0.2 or lower.

At a temperature of 60°C, the films used in the present invention preferably exhibit a static and / or dynamic coefficient of friction of about 1 or lower, about 0.8 or lower, about 0.6 or lower, or about 0.5 or lower.

At a temperature of 80°C, the films employed in the present invention preferably exhibit a static and / or dynamic coefficient of friction of about 4 or lower, about 3.5 or lower, about 3 or lower, about 2.5 or lower, about 2 or lower, about 1.5 or lower, about 1 or lower, about 0.8 or lower, or about 0.6 or lower.

The coefficients of friction mentioned above may be determined using any technique known to those skilled in the art. For example, coefficients of friction may be measured using a TMI (Testing Machines Inc.) Messmer Slip and Friction Tester Model No. 32-90-00-0004, used in accordance with the test method set out in ASTM D1894.

The films used in the processes of the present invention exhibit good (i.e. low) thermal blocking properties. For example, if samples of those films are positioned such that their outer surfaces are in contact and left for one hour at a temperature of 60°C and at a pressure of 0.5 psi, the seal strength between them is preferably less than about 20g/25mm, less than about 10g/25mm, or most preferably, less than about 5g/25mm.

The sealing layers will generally comprise one or more polyolefinic homopolymers, one or more polyolefinic copolymers, or mixtures of two or more thereof. By "copolymers" in this sense is meant any number of constituent polymer parts (such as ethylene, propylene, butene or any olefin having up to ten carbon atoms), so that bipolymers, terpolymers and copolymers of four or more constituent polymer parts are all included, for example. Both random and block copolymers are included in this definition, and the sealing layers may additionally or alternatively comprise blends of one or more homopolymers, copolymers or mixtures thereof.

In preferred embodiments of the present invention, the inner and / or outer sealing layers comprise copolymers of propylene/ethylene, of propylene/butene, or of propylene/ethylene/butene, or of blends thereof.

Where the inner and / or outer sealing layer comprises a copolymer of propylene/ethylene, propylene is preferably present as the principle constituent and is preferably present in an amount of at least about 85%, about 90%, about 95% or about 98% by weight of the copolymer.

Where the inner and / or outer sealing layer comprises a copolymer of propylene/butene, propylene is preferably present as the principle constituent and preferably present in an amount of from about 50%, about 60%, about 65% or about 70% to about 80%, about 85%, about 90% or about 95% by weight of the copolymer.

Where the inner and / or outer sealing layer comprises a copolymer of propylene/ethylene/butene, propylene is preferably present in an amount of from about 70%, about 75%, or about 80% to about 85%, about 90% or about 95% by weight of the copolymer. Ethylene is preferably present in an amount of from about 0.5%, about 1%, about 2%, about 4%, or about 6% to about 10% by weight of the copolymer. Butene is preferably present in an amount of from about 3%, about 5%, about 7.5%, about 10%, or about 12.5% to about 15%, about 17.5%, about 20%, or about 25% by weight of the copolymer.

The films employed in the present invention comprise an antiblock component. This comprises about 0.2% by weight of the outer layer of silicone. In embodiments of the present invention, the antiblock component comprises about 0.2%, about 0.5%, about 0.75%, or about 1% to about 1.5%, about 1.75% or about 2% of silicone.

The silicone can take the form of any polymerised siloxane, including those which are substituted with alkyl groups, such as polydimethylsiloxane, crosslinked siloxanes, methyltrimethoxy silanes and the like.

Examples of a preferred silicone resin for use in the films employed in the present invention are marketed under the name Tospearl. Tospearl resins are based on spherical particles of crosslinked siloxanes made by the controlled hydrolysis and condensation of methyltrimethoxysilane. Their spherical nature, narrow particle size distribution and chemical and thermal stability make them ideal for use as an antiblocking agent.

The silicone may be employed in the form of a silicone oil, resin, gum, wax, or grease.

The antiblock component may comprise other components in addition to silicone. For example, silica (including fumed, colloidal, synthetic and amorphous silica) or silicates (including calcium silicate) may be employed. If present, silica and / or silicates are present in an amount of about 0.1%, about 0.15%, about 0.2%, about 0.25% or about 0.3% to about 0.4%, about 0.5%, about 0.7% to about 1% by weight of the layer. If provided in particulate form, the silica and / or silicates preferably have an average particle size of about 3 to about 7 microns.

Additionally or alternatively, the antiblock component may comprise other antiblock additives, including microcrystalline wax (e.g. with an average particle size from about 0.1 to about 0.6 µm), carnauba, fatty amide waxes and the like.

For the avoidance of doubt, the inner layer of the film employed in the process of the present invention may additionally comprise one or more of the materials of the antiblock component, optionally in the quantities mentioned above. If employed, the antiblock materials present in the inner layer may be the same as or different to the antiblock component of the outer layer.

The naked collation film has sealing compatibility with itself (A to B, A to A and/or B to B) at the sealing condition but is sealingly incompatible at the sealing condition and heat shrinking condition with the filmic material of the individually wrapped packages. One way in which such sealing incompatibility can be provided is by providing in at least the inner sealing layer of the naked collation film at least one polyolefinic material derived from a monomer of different chain length from a monomer from which at least one polyolefinic material in the filmic material of the wrapped individual packages is derived.

Preferably the external surface of the filmic polyolefinic material of the individually wrapped packages comprises at least one polyolefinic component derived from a monomeric olefin having a carbon chain length x, and the material of the inner sealing layer A comprises at least one polyolefinic component derived from a monomeric olefin having a carbon chain length y, y being different from x. Optionally, the polyolefinic material of the outer sealing layer B may also comprise at least one polyolefinic component derived from a monomeric olefin having a carbon chain length y. Thus, in the case where the surface polyolefinic material of the individually wrapped packages comprises a polyethylenic component, the polyolefinic material of the inner sealing layer A preferably comprises a polypropylenic component and/or a polybutylenic component. In this case the polyolefinic material of the outer sealing layer B may also comprise a polypropylenic component and/or a polybutylenic component. In the case where the surface polyolefinic material of the individually wrapped packages comprises a polypropylenic component, the polyolefinic material of the inner sealing layer A preferably comprises a polyethylenic component and/or a polybutylenic component. In this case the polyolefinic material of the outer sealing layer B may also comprise a polyethylenic component and/or a polybutylenic component. In the case where the surface polyolefinic material of the individually wrapped packages comprises a polybutylenic component, the polyolefinic material of the inner sealing layer A preferably comprises a polyethylenic component and/or a polypropylenic component. In this case the polyolefinic material of the outer sealing layer B may also comprise a polyethylenic component and/or a polypropylenic component.

For the avoidance of doubt it is mentioned that when the external surface of the filmic polyolefinic material of the individually wrapped packages comprises at least one polyolefinic component derived from a monomeric olefin having a carbon chain length x, and the polyolefinic material of the inner sealing layer A comprises at least one polyolefinic component derived from a monomeric olefin having a carbon chain length y, y being different from x, the polyolefinic material of the inner sealing layer A may additionally comprise at least one polyolefinic component derived from a monomeric olefin having a carbon chain length x. In this case, the polyolefinic material of the inner sealing layer A comprises at least two polyolefinic components, one being derived from a monomeric olefin having a carbon chain length y and the other being derived from a monomeric olefin having a carbon chain length x. The polyolefinic material of the outer sealing layer B may also additionally comprise at least one polyolefinic component derived from a monomeric olefin having a carbon chain length x, in which case the polyolefinic material of the outer sealing layer B also comprises at least two polyolefinic components, one being derived from a monomeric olefin having a carbon chain length y and the other being derived from a monomeric olefin having a carbon chain length x. It is also contemplated within the scope of the invention to provide a sealing layer and/or a filmic polyolefinic material having a polymeric component derived from plural monomeric sources (for example a polypropylene/polyethylene random or block copolymer, and/or a blend of polypropylene and polyethylene). It will be appreciated that in this case the filmic polyolefinic material and the material of the sealing layer may consist of or comprise the same polyolefinic material, for example a block or random copolymer or blend derived from plural monomeric sources wherein at least one monomeric source (for example ethylene) is of different chain length from at least one other monomeric source (for example propylene).

Preferably both x and y are from 2 to 4.

Sealing incompatibility between the naked collation film and the filmic wraps can additionally or alternatively be achieved by including a non-polyolefinic material in the naked collation film, most preferably the inner sealing layer and / or in the filmic wraps. Examples of such materials include polyesters, acrylic acid esters, polyvinylidene chloride, ethylene vinyl acetate copolymer or mixtures thereof.

Additionally or alternatively, sealing incompatibility between the naked collation film and the filmic wraps of the individual packages can be achieved by selecting the material of the outer sealing layer (and/or the inner sealing layer) to have a low seal initiation temperature, at which the sealing layer will be sealingly compatible with itself at the sealing condition and/or with the other sealing layer of the naked collation film, but will be sealingly incompatible under that condition with the polyolefinic filmic material of the wrapped individual packages. In this case the naked collation film is designed to have at least one layer having a low seal initiation temperature. Sealing at a low temperature prevents the naked collation film from sticking to the unit wraps.

By "low seal initiation temperature" is preferably meant that the sealing layer having the low seal initiation temperature will seal to itself and/or to the other sealing layer of the naked collation film at a temperature of about 95°C or lower, about 90°C or lower, about 85°C or lower, about 80°C or lower or about 75°C or lower when subjected to a sealing condition of, for example, 5psi for a 0.5s dwell time. The sealing condition may be selected to correspond to the said seal initiation temperature, or to be greater than it, provided that the sealing condition is not selected to be so great that sealing between the inner sealing layer of the naked collation film and the filmic material of the wrapped individual packages will begin to occur.

The heat seal strength of the inner sealing layer to itself and/or to the outer sealing layer at the specified sealing condition is preferably above 100g/25mm, more preferably above 200g/25mm, still more preferably above 300g/25mm and most preferably above 400g/25mm.

The seal initiation temperature of the or each sealing layer of the naked collation film to itself and/or to the other sealing layer of the naked collation film should in any event be lower than the heat seal threshold of the said sealing layer to the filmic material of the unit wraps, preferably substantially lower, for example at least about 5°C lower, about 10°C lower, about 15°C lower, about 20°C lower or about 25°C lower. At the specified sealing condition, the seal strength of the or each sealing layer of the naked collation film to itself and/or to the other sealing layer of the naked collation film should be higher than the seal strength of the said sealing layer to the filmic material of the unit wraps, preferably substantially higher, for example at least about 50g/25mm higher, preferably at least about 100g/25mm higher, more preferably at least about 150g/25mm higher.

By "sealing incompatibility" or "sealingly incompatible" is preferably meant that the seal strength at the sealing condition is less than 100g/25mm, preferably less than 80g/25mm, more preferably less than 60g/25mm, still more preferably less than 40g/25mm, yet more preferably 30g/25mm, even more preferably less than 20g/25mm and most preferably less than 10g/25mm, or even less than 5g/25mm, or close to 0g/25mm or zero.

The inner and / or outer sealing layers of the film may optionally be treated in some way further to enhance the sealing incompatibility between the sealing layers and the filmic material. However, films of the present invention are preferably not discharge treated in any way.

The filmic material may be of any known construction, including monolayer and multilayer.

The sealing layers (A and B) are preferably formed as coat layers, or coatings, on opposite surfaces of the core layer C. These layers may be formed by coextrusion with the core layer, by the subsequent application of one of more coats onto the surface of the already formed core layer, by extrusion coating, or by a combination thereof. Generally it is preferred that the sealing layers be coextruded together with the core layer in manufacture of the naked collation film.

The core layer is polyolefinic and may also comprise one or more homopolymers, one or more copolymers, or mixtures of two or more thereof. Preferably however, the core layer comprises a homopolymer, more preferably polypropylene, most preferably biaxially oriented polypropylene. The material of the core layer may however be blended with one or more further materials to select if desired additional or alternative functionality or aesthetics.

The polyolefinic core may comprise a quantity of resin, for example about 5%, about 7%, or about 9% to about 12%, about 15% or about 20%. Examples of resin that may be employed in the core layers of the films to be utilised in the process of the present invention include hydrogenated hydrocarbon resins, such as those marketed by Arakawa (e.g. Arkon P-125) or by Eastman (e.g. Regalite R1125), petroleum C₉ aromatic based resins, C₅ aliphatic resins, cyclopentadiene resins or mixtures thereof. Preferably, the resin/s have a softening point of less than 140°C or less than 130°C.

It will be understood that the naked collation film may comprise additional layers as well as the hitherto identified core and sealing layers C, A and B. Such additional layers may for example include lamination layers, printable layers, UV barrier layers, oxygen permeability or barrier layers, water vapour permeability or barrier layers and the like. Such additional layers may be provided also by coextrusion, by post-coextrusion coating, by coextrusion coating or by combinations of two or more thereof. Alternatively, layer A and / or B may be positioned adjacent to and in contact with the core layer C.

The naked collation film may comprise, in its core layer and/or in one or more of its sealing layers and/or in any additional layer(s) functional materials for other purposes in relation to the functional or aesthetic characteristics of the film. Suitable functional materials may be selected from one or more of the following, mixtures thereof and/or combinations thereof: UV absorbers, dyes; pigments, colorants, metallised and/or pseudo-metallised coatings; lubricants, anti-static agents (cationic, anionic and/or non-ionic, e.g. poly-(oxyethylene) sorbitan monooleate), anti-oxidants (e.g. phosphorous acid, tris (2,4-di-tert-butyl phenyl) ester), surface-active agents, stiffening aids; gloss improvers, prodegradants, barrier coatings to alter the gas and/or moisture permeability properties of the film (such as polyvinylidene halides, e.g. PVdC); particulate materials (e.g. talc); additives to improve ink adhesion and/or printability, additives to increase stiffness (e.g. hydrocarbon resin); additives to increase shrinkage (e.g. hard resin).

Some or all of the additives listed above may be added together as a composition to coat the films of the present invention and/or form a new layer which may itself be coated and/or may form the outer or surface layer of the sheet. Alternatively, some or all of the preceding additives may be added separately and/or incorporated directly into the bulk of the core layer optionally during film formation (e.g. as part of the original polymer composition), and thus they may or may not form layers or coatings as such.

Films of the invention can also be made by the laminating of two co-extruded films. Application of the outer layer(s) onto the core layer is conveniently effected by any of the laminating or coating techniques conventionally employed in the production of composite multi-layer films. Preferably, however, one or more outer layers are applied to the substrate by a co-extrusion technique in which the polymeric components of the core and outer layers are co-extruded into intimate contact while each is still molten. Preferably the co-extrusion is effected from a multi channel annular die so designed that the molten polymeric components constituting individual layers of the composite film merge at their boundaries within the die to form a single composite structure which is then extruded from a common die orifice in the form of a tubular extrudate. It will be appreciated that any other shape of suitable die could also be used such as flat die.

The polymeric film can be made by any process known in the art, including, but not limited to, cast sheet, cast film, or blown film. This invention may be particularly applicable to films comprising cavitated or non-cavitated polypropylene films, with a block copolymer polypropylene/polyethylene core and skin layers with a thickness substantially below that of the core layer and comprising for example random copolymers of ethylene and propylene or random terpolymers of propylene, ethylene and butylene. The film may comprise a biaxially orientated polypropylene (BOPP) film, which may be prepared as balanced films using substantially equal machine direction and transverse direction stretch ratios, or can be unbalanced, where the film is significantly more orientated in one direction (MD or TD). Sequential stretching can be used, in which heated rollers effect stretching of the film in the machine direction and a stenter oven is thereafter used to effect stretching in the transverse direction. Alternatively, simultaneous stretching, for example, using the so-called bubble process, or simultaneous draw stenter stretching may be used.

The naked collation film may heat shrink using any apparatus for heat shrinking packaging materials and the like, including non-reciprocating or reciprocating plates and / or heat shrink tunnels or passages. Heat shrink temperatures ranging from about 50°C, about 60°C, about 70°C, about 80°C, or about 85°C to about 90°C, about 95°C, about 100°C, about 110°C, about 120°C, about 130°C, about 140°C, about 150°C, about 170°C, or about 200°C will typically be used.

An example of heat shrinking apparatus that may be employed include the Focke 409 shrink kit. This apparatus comprises either one reciprocating proximity plate that may be operated on the top of the bundle only, or a plurality of reciprocating plates which may be operated on the top and bottom of the bundle.

An additional example of heat shrinking apparatus that may be employed is the Marden Edwards overwrapper tunnel.

Those skilled in the art will recognise that there are a range of shrink machine types and methods available. The appropriate equipment will be selected on the basis of the degree of shrink required as well as factory demands and requirements.

In preferred embodiments, the naked collation film employed in the present invention will exhibit a degree of shrinkage in the machine and / or transverse directions at about 60°C, about 70°C, about 80°C, about 90°C, about 100°C, about 110°C, about 120°C, about 130°C or about 140°C of about 10% or more, about 15% or more, about 20% or more, about 25% or more, about 30% or more, about 35% or more, about 40% or more, about 45% or more, or about 50% or more. The degree of shrinkage may be balanced or may be greater in the machine or transverse directions.

The films used in accordance with the present invention can be of a variety of thicknesses according to the application requirements. For example they can be from about 10 to about 240µm thick, preferably from about 12 to 50µm thick, and most preferably from about 20 to about 30µm thick.

In a multi-layer film in accordance with the invention having at least a core layer, an inner sealing layer and an outer sealing layer, each sealing layer may independently have a thickness of from about 0.05µm to about 2µm, preferably from about 0.075µm to about 1.5µm, more preferably from about 0.1µm to about 1.0µm, most preferably from about 0.15µm to about 0.5µm. The inner and/or outer sealing layers may be ink printable, either inherently or with the aid of a suitable treatment.

According to a second aspect of the present invention, there is provided a naked collation package comprising an arrangement of individual packages, individually packaged in a filmic material, that are packed together in said naked collation package in a naked collation film, wherein the naked collation film comprises a polyolefinic core layer C, an inner sealing layer A on the inner surface of the naked collation film and a polyolefinic outer sealing layer B on the outer surface of the naked collation film, the material of the inner sealing layer A being selected for sealing incompatibility with the filmic material of the individually wrapped packages under a specified sealing condition and heat shrinking condition, and the polyolefinic material of the outer sealing layer B being selected for sealing compatibility with B and for sealing compatibility with A under the specified sealing condition, wherein layers A and B are formed of different materials and layer B comprises at least one polyolefinic polymer and an antiblock component comprising at least 0.2% by weight of the layer of silicone; the individual packages being arranged in an ordered configuration and the naked collation film having been heat shrunk to closely surround the arrangement of packages, without being sealed to the packages.

For the avoidance of any doubt, references to features of the first aspect of the present invention discussed above are optionally applicable to the product of the second aspect of the present invention, where appropriate.

The invention is further illustrated by reference to the following examples, which are by way of illustration only, and are not limiting to the scope of the invention described herein.

### Example 1 - Preparation of Films

Three films were prepared using the 'bubble process', having the compositions set out below:

| **Layer** | **Component** | **Film 1** | | **Film 2** | | **Film 3** | |
|---|---|---|---|---|---|---|---|
| | | **Proportion** | **Layer Thickness (µm)** | **Proportion** | **Layer Thickness (µm)** | **Proportion** | **Layer Thickness (µm)** |
| *Inner* | Blend of PP/PB and PP/PE Copolymers | 99.4 | 0.28 | 99.4 | 0.28 | 99.4 | 0.28 |
| | Silicone | 0.5 | | 0.5 | | 0.5 | |
| | Silica | 0.1 | | 0.1 | | 0.1 | |
| *Core* | Propylene Homopolymer | 92.7 | 24.44 | 90.0 | 24.44 | 90.0 | 24.32 |
| | Hydrogenated Hydrocarbon Hard Resin | 7.3 | | 10.0 | | 10.0 | |
| *Outer* | PP/PB Copolymer | 49.225 | 0.28 | 49.225 | 0.28 | 49.225 | 0.4 |
| | PP/PE/PB Terpolymer | 49.225 | | 49.225 | | 49.225 | |
| | Amorphous Silica | 0.35 | | 0.35 | | 0.35 | |
| | Silicone Gum | 1.2 | | 1.2 | | 1.2 | |

### Example 1a - Optical Properties of Films

The optical properties of Films 1 to 3 were determined. Specifically, the Gloss (45°) and Haze (wide angle and narrow angle) values for those films were determined using the apparatus and techniques outlined above.

| **Film** | **Gloss 45° (%)** | **WAH (%)** | **NAH (%)** |
|---|---|---|---|
| *1* | 95.4 | 1.5 | 2-3 |
| *2* | 95.7 | 1.4 | 1-2 |
| *3* | 95.8 | 1.7 | 1.5-2.5 |

As will be apparent to those skilled in the art, the optical properties, especially the low haze values exhibited by Films 1 to 3 renders them suitable for use as naked collation films.

### Example 1b - Coefficient of Friction (Ambient Temperature)

Samples of Films 1 to 3 were subjected to testing using the Messmer Slip and Friction tester, Model No. 32-90-00-0004 apparatus in accordance with ASTM D1894 and the average coefficients of friction recorded are set out below:

| **Film** | **Coefficient of Friction** | |
|---|---|---|
| | **Static** | **Dynamic** |
| *1* | 0.27 | 0.23 |
| *2* | 0.24 | 0.21 |
| *3* | 0.26 | 0.21 |

These results confirm that, at ambient temperatures, the films utilised in the process of the present invention exhibit low coefficients of friction.

### Example 1c - Three Ball Slip Test

Samples of Films 1 to 3 were subjected to the three ball slip test. This test provides an indication of slip between the film surface and metal, with only a very small area of contact.

A rigid plate (600mm x 150mm) with a flat surface is set at an inclined fixed angle (12°) to a base. The film being tested is placed on the inclined plane with the surface to be tested uppermost.

A sled (50mm x 50mm x 6.4mm) of aluminium alloy plate has three tungsten carbide ball-bearings of 6mm diameter set therein. The balls protrude by 1.5mm and are set at the apices of an isosceles triangle of the base of the sledge. The sledge is placed onto the film with its leading edge on the upper line top of incline. The time taken in seconds for the sledge to reach the lower mark of the incline is recorded and represents the descent time.

Film to metal slip is an important property which may determine the packaging performance of the film on overwrap/form-fill machines.

The average results of this test are set out below:

| **Film** | **Result (seconds)** |
|---|---|
| *1* | 6.13 |
| *2* | 4.69 |
| *3* | 4.68 |

### Example 1d - Coefficient of Friction (Elevated Temperature)

Samples of Films 1 to 3 were subjected to testing using the Messmer Slip and Friction tester, Model No. 32-90-00-0004 apparatus in accordance with ASTM D1894 and the average coefficients of friction recorded are set out below:

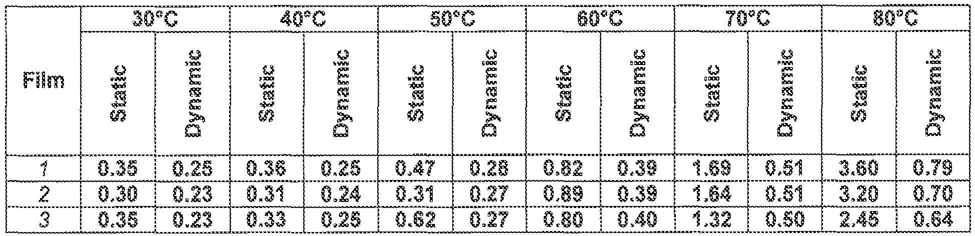

As will be recognised by those skilled in the art, the coefficients of friction remain relatively low, even at elevated temperatures and thus the films employed in the processes of the present invention exhibit good hot slip properties.

### Example 1e - Seal Initiation Temperature (Out / Out)

Samples of Films 1 to 3 were subjected to tests to determine the seal strength obtained when the outer faces of two strips of the same material were heat sealed at 5 psi for 0.5 seconds dwell time. The average seal strengths observed are provided below:

| **Sealing Temperature (°C)** | **Seal Strength (g/25mm)** | | |
|---|---|---|---|
| | **Film 1** | **Film 2** | **Film 3** |
| *76* | 123.7 | 85.4 | 85.2 |
| *78* | 177.5 | 165.5 | 132.0 |
| *80* | 224.5 | 187.0 | 130.5 |
| *82* | 282.5 | 365.5 | 229.5 |
| *84* | 368.0 | 300.5 | 236.5 |
| *86* | 395.0 | 333.5 | 276.0 |
| *90* | 405.5 | 389.0 | 336.0 |

These data confirm that the seal initiation temperature exhibited by the films for use with the present invention is acceptably low, with a 200g/25mm seal being formed between outer layers of those films at a temperature of around 80°C or just over.

### Example 1f - Seal Initiation Temperature (In/Out)

Samples of Films 1 to 3 were subjected to tests to determine the seal strength obtained when the inner and outer faces of two strips of the same material were heat sealed at 5 psi for 0.5 seconds dwell time. The average seal strengths observed are provided below:

| **Sealing Temperature (°C)** | **Seal Strength (g/25mm)** | | |
|---|---|---|---|
| | **Film 1** | **Film 2** | **Film 3** |
| *84* | 59.5 | 61.9 | 20.9 |
| *86* | 128.0 | 194.0 | 56.7 |
| *88* | 241.3 | 177.0 | 138.5 |
| *90* | 261.3 | 294.0 | 336.5 |
| *92* | 261.0 | 289.5 | 279.0 |
| *94* | 381.8 | 286.5 | - |

| | | | |
|---|---|---|---|
| *Seal Strength obtained exceeded testable value. | | | |

These data confirm that the seal initiation temperature exhibited by the films for use with the present invention is acceptably low, with a 200g/25mm seal being formed between inner and outer layers of those films at a temperature of around 88°C to 90°C.

### Example 1g - Incompatibility Window

Samples of Films 1 to 3 were tested to determine the temperature at which seals were formed between their inner surfaces and a typical polyolefinic filmic wrap, having an outer coat comprising a metallocene catalysed PP/PE (95/5)% co-polymer formulated with silicone gum and silica.

This test was performed using heat seal apparatus operated at a pressure of 5 psi with a dwell time of 0.5 seconds. The lower jaw of the heat sealing apparatus was removed to replicate the lateral seal of the naked collation bundle.

By determining the temperature at which a seal is formed between the naked collation film and the polyolefinic filmic wrap, it is possible to determine the incompatibility window, in which heat sealing can be performed with minimal risk of seals being formed between the naked collation film and the filmic wraps.

| **Film** | **Seal Temperature to Achieve 200g/25mm In/Out Seal Strength (° C)** | **Seal Temperature to Form Seal Between Naked Collation Film and Filmic Wrap (°C)** | **Incompatibility Window (° C)** |
|---|---|---|---|
| *1* | 88 | 102 | 14 |
| *2* | 90 | 104 | 14 |
| *3* | 90 | 102 | 12 |

The provision of an incompatibility window of 12 to 14°C is advantageous as it is sufficiently broad to enable sealing to be performed without fluctuations in heat seal temperature resulting in the naked collation film being sealed to the filmic wraps of the individual packages in the bundles.

### Example 1h - Thermal Blocking

Samples of Films 1 to 3 were positioned such that their outer surfaces were in contact and left for one hour at a temperature of 60°C and at a pressure of 0.5 psi. The force required to separate the sheets was then measured and the average results are provided below.

| **Film** | **Force Required to Separate Sheets (g/25mm)** |
|---|---|
| *1* | 4 |
| *2* | 4 |
| *3* | 4 |

As can be seen, even when the outer faces of the naked collation films employed in the process of the present invention are held together at elevated pressures over extended periods of time, no seal of any significant strength is formed between them. This suggests that wrapped bundles can be packed and shipped while still warm or hot following the wrapping procedure without risk that the wrapped packages will adhere to each other.

### Example 1i - Shrinkage Performance

Samples of Films 1 and 2 were tested using the TST1 shrink tester (Lenzing Instruments).A shrinkage curve was generated by configuring the oven to automatically heat up at a specified rate (from 40°C to 140°C at 10°C per min) while the instrument logs the corresponding change in shrinkage. Measurements are taken at 0.1°C increments.

The average degree of shrinkage in the machine and transverse directions of those samples at varying temperatures is set out below:

| **Temperature (°C)** | **Film 1** | | **Film 2** | |
|---|---|---|---|---|
| | **MD Shrinkage (%)** | **TD Shrinkage (%)** | **MD Shrinkage (%)** | **TD Shrinkage (%)** |
| *40* | -0.115 | -0.081 | -0.128 | -0.088 |
| *50* | -0.074 | -0.068 | -0.047 | -0.068 |
| *60* | 0.895 | 0.449 | 0.801 | 0.568 |
| *70* | 1.399 | 1.530 | 1.776 | 1.770 |
| *80* | 2.228 | 2.930 | 2.753 | 3.334 |
| *90* | 3.094 | 4.617 | 3.741 | 5.134 |
| *100* | 3.946 | 6.693 | 4.733 | 7.327 |
| *110* | 5.333 | 9.431 | 6.223 | 10.170 |
| *120* | 7.493 | 13.337 | 8.535 | 14.404 |
| *130* | 11.600 | 20.023 | 13.074 | 22.616 |
| *140* | 21.421 | 31.518 | 22.980 | 33.487 |

These data confirm that the films employed in the process of the present invention function effectively as heat shrink films at temperatures conventionally used in heat shrinking apparatus.

### Example 2 - Preparation of Films

Four films were prepared using the 'bubble process', having the compositions set out below:

| **Layer** | **Component** | **Film 4** | | **Film 5** | | **Film 6** | | **Film 7** | |
|---|---|---|---|---|---|---|---|---|---|
| | | **% of Layer** | **Layer Thickness (µm)** | **% of Layer** | **Layer Thickness (µm)** | **% of Layer** | **Layer Thickness (µm)** | **% of Layer** | **Layer Thickness (µm)** |
| *Inner* | Blend of PP/PB and PP/PE Copolymers | 99.4 | 0.28 | 99.4 | 0.28 | 99.4 | 0.28 | 99.4 | 0.28 |
| | Silicone | 0.5 | | 0.5 | | 0.5 | | 0.5 | |
| | Silica | 0.1 | | 0.1 | | 0.1 | | 0.1 | |
| *Core* | Propylene Homopolymer | 100 | 24.32 | 100 | 24.44 | 100 | 24.32 | 100 | 24.44 |
| *Outer* | PP/PB Copolymer | 49.35 | 0.40 | 49.35 | 0.28 | 74.025 | 0.40 | 74.025 | 0.28 |
| | PP/Pt/PB Terpolymer | 49.35 | | 49.35 | | 24.675 | | 24.675 | |
| | Amorphous Silica | 0.1 | | 0.1 | | 0.1 | | 0.1 | |
| | Silicone Gum | 1.2 | | 1.2 | | 1.2 | | 1.2 | |

### Example 2a - Optical Properties of Films

The optical properties of Films 4 to 7 were determined. Specifically, the Gloss (45°) and Haze (wide angle and narrow angle) values for Films 4 to 7 were determined using the apparatus and techniques previously outlined.

| **Film** | **Gloss 45° (%)** | **WAH (%)** | **NAH (%)** |
|---|---|---|---|
| *4* | 96.8 | 1.6 | 1-2 |
| *5* | 95.4 | 1.4 | 1-2 |
| *6* | 94.3 | 1.6 | 1-2 |
| *7* | 96.0 | 1.4 | 1-2 |

As will be apparent to those skilled in the art, the optical properties, especially the low haze values exhibited by Films 4 to 7 renders them suitable for use as naked collation films.

### Example 2b - Coefficient of Friction (Ambient Temperature)

Samples of Films 4 to 7 were subjected to testing using the Messmer Slip and Friction tester as in Example 1b. The average coefficients of friction recorded are set out below:

| **Film** | **Coefficient of Friction at 23°C** | |
|---|---|---|
| | **Static** | **Dynamic** |
| *4* | 0.36 | 0.25 |
| *5* | 0.37 | 0.23 |
| *6* | 0.40 | 0.28 |
| *7* | 0.42 | 0.27 |

These results confirm that, at ambient temperatures, the films utilised in the process of the present invention exhibit low coefficients of friction.

### Example 2c - Coefficient of Friction (Elevated Temperature)

Samples of Films 4 to 7 were subjected to testing using the Messmer Slip and Friction tester as in Example 1d. The average coefficients of friction recorded are set out below:

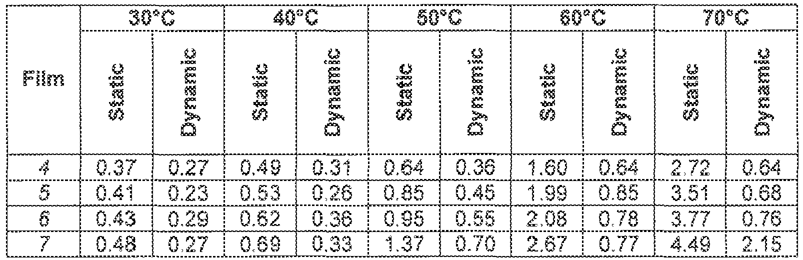

It is known that coefficients of friction are highly dependent on the surface characteristics of the film as well as the sealing properties of the polymer. From the results, it can be seen that increasing the outer coat weight of the film lowers the coefficients of friction. Without wishing to be bound by theory, it is believed that increasing the coat weight has the effect of increasing the level of antiblock at the surface of these films, which in turn lowers the coefficients of friction at elevated temperatures.

Overall, the coefficients of friction remain relatively low for all the films, even at elevated temperatures and thus the films employed in the processes of the present invention exhibit good hot slip properties.

### Example 2d - RDM Seal Initiation Temperature (Out / Out)

Samples of Films 4 to 7 were subjected to tests to determine the seal strength obtained when the outer faces of two strips of the same material were heat sealed at 5 psi for 0.5 seconds dwell time. The average seal strengths observed are provided below:

| **Sealing Temperature (°C)** | **Seal Strength (g/25mm)** | | | |
|---|---|---|---|---|
| | **Film 4** | **Film 5** | **Film 6** | **Film 7** |
| *84* | 143.0 | - | 130.5 | 146.0 |
| *86* | 317.0 | 152.0 | 201.0 | 335.0 |
| *88* | 444.0 | 280.5 | 405.0 | 413.5 |
| *90* | 458.0 | 406.0 | 406.5 | 434.5 |
| *92* | 138.0 | 393.5 | 442.0 | 442.0 |
| *94* | 158.0 | - | - | - |
| *96* | 319.0 | 399.0 | - | 456.0 |
| *98* | 431.0 | - | - | - |
| *100* | 439.0 | - | - | - |

These data confirm that the seal initiation temperature exhibited by the films for use with the present invention is acceptably low, with a 200g/25mm seal being formed between outer layers of those films at a temperature of between around 85°C to 91°C.

### Example 2e - RDM Seal Initiation Temperature (In/Out)

Samples of Films 4 to 7 were subjected to tests to determine the seal strength obtained when the inner and outer faces of two strips of the same material were heat sealed at 5 psi for 0.5 seconds dwell time. The average seal strengths observed are provided below:

| **Sealing Temperature (°C)** | **Seal Strength (g/25mm)** | | | |
|---|---|---|---|---|
| | **Film 4** | **Film 5** | **Film 6** | **Film 7** |
| *90* | - | 38.3 | 112.0 | 139.0 |
| *92* | - | 144.0 | 185.5 | 318.0 |
| *94* | - | 223.5 | 289.0 | 341.0 |
| *96* | 141.5 | 348.5 | 303.5 | 401.0 |
| *98* | 233.5 | 412.0 | 403.5 | 280.0 |
| *100* | 298.5 | - | - | - |
| *102* | 444.0 | - | - | - |

These data confirm that the seal initiation temperature exhibited by the films for use with the present invention is acceptably low, with a 200g/25mm seal being formed between inner and outer layers of those films at a temperature of between around 91 °C to 99°C.

### Example 2f- RDM Incompatibility Window

Samples of Films 4 to 7 were tested to determine the temperature at which seals were formed between their inner surfaces and a typical polyolefinic filmic wrap, having an outer coat comprising a metallocene catalysed PP/PE (95/5)% co-polymer formulated with silicone gum and silica.

This test was performed using heat seal apparatus operated at a pressure of 5 psi with a dwell time of 0.5 seconds. The lower jaw of the heat sealing apparatus was removed to replicate the lateral seal of the naked collation bundle.

By determining the temperature at which a seal is formed between the naked collation film and the polyolefinic filmic wrap, it is possible to determine the incompatibility window, in which heat sealing can be performed with minimal risk of seals being formed between the naked collation film and the filmic wraps.

| **Film** | **Seal Temperature to Achieve 200g/25mm In/Out Seal Strength (°C)** | **Seal Temperature to Form Seal Between Naked Collation Film and Filmic Wrap (°C)** | **Incompatibility Window (°C)** |
|---|---|---|---|
| *4* | 100 | 106 | 6 |
| *5* | 95 | 106 | 11 |
| *6* | 93 | 106 | 13 |
| *7* | 94 | 106 | 12 |

The provision of an incompatibility window of 6°C to 13°C is advantageous as it is sufficiently broad to enable sealing to be performed without fluctuations in heat seal temperature resulting in the naked collation film being sealed to the filmic wraps of the individual packages in the bundles.

### Example 2g - Brugger Seal Initiation Temperature (Out/Out)

Samples of Films 4 to 7 were subjected to tests to determine the seal strength obtained when the outer faces of two strips of the same material were heat sealed at 0.5 psi for 0.15 seconds dwell time on a Brugger Sealer. These conditions represent the low sealing conditions which are typical of unit wrap machines. The average seal strengths observed are provided below:

| **Sealing Temperature (°C)** | **Seal Strength (g/25mm)** | | | |
|---|---|---|---|---|
| | **Film 4** | **Film 5** | **Film 6** | **Film 7** |
| *83* | - | - | - | 37.0 |
| *85* | - | - | - | 91.0 |
| *87* | - | - | - | 106.0 |
| *89* | - | - | - | 236.0 |
| *91* | - | 78.5 | 231.0 | 174.5 |
| *93* | - | 181.5 | 328.0 | 321.0 |
| *95* | - | 257.0 | - | 366.0 |
| *96* | - | 372.0 | 355.0 | 365.0 |
| *97* | - | 310.0 | - | - |
| *98* | 80.5 | 313.0 | 395.5 | 421.0 |
| *100* | 89.0 | - | - | - |
| *102* | 226.0 | - | - | - |
| *104* | 339.0 | - | - | - |
| *106* | 401.0 | - | - | - |

These data show that the low pressure seal initiation temperature exhibited by the films for use with the present invention is acceptably low, with a 200g/25mm seal being formed between outer layers of those films at a temperature of between around 91°C to 102°C.

### Example 2h - Brugger Seal Initiation Temperature (In/Out)

Samples of Films 4 to 7 were subjected to tests to determine the seal strength obtained when the inner and outer faces of two strips of the same material were heat sealed at 0.5 psi for 0.15 seconds dwell time on a Brugger Sealer. The average seal strengths observed are provided below:

| **Sealing Temperature (°C)** | **Seal Strength (g/25mm)** | | | |
|---|---|---|---|---|
| | **Film 4** | **Film 5** | **Film 6** | **Film 7** |
| *90* | - | 37.0 | - | 52.0 |
| *93* | - | 37.0 | - | 106.5 \| |
| *94* | - | - | 194.0 | 132.0 |
| *95* | - | 192.0 | - | 169.0 |
| *96* | 58.0 | 68.0 | 268.5 | 328.0 |
| *97* | - | 185.0 | - | 286.0 |
| *98* | 80.5 | 125.0 | 327.0 | 317.0 |
| *100* | 152.5 | 287.0 | 327.0 | 325.0 |
| *102* | 199.0 | 418.0 | - | - |
| *104* | 384.0 | - | - | - |

These data show that the low pressure seal initiation temperature exhibited by the films for use with the present invention is acceptably low, with a 200g/25mm seal being formed between outer layers of those films at a temperature of between around 95°C to 102°C.

### Example 2i - Brugger Incompatibility Window

Samples of Films 4 to 7 were tested to determine the temperature at which seals were formed between their inner surfaces and a typical polyolefinic filmic wrap, having an outer coat comprising a metallocene catalysed PP/PE (95/5)% co-polymer formulated with silicone gum and silica.

This test was performed using heat seal apparatus operated at a pressure of 0.5 psi with a dwell time of 0.15 seconds on a Brugger Sealer. The Brugger sealing apparatus has a single heated jaw which impacts at a fixed pressure.

The incompatibility window, in which low pressure heat sealing can be performed with minimal risk of seals being formed between the naked collation film and the filmic wraps, was determined.

| **Film** | **Seal Temperature to Achieve 200g/25mm In/Out Seal Strength (°C)** | **Seal Temperature to Form Seal Between Naked Collation Film and Filmic Wrap (°C)** | **Incompatibility Window (°C)** |
|---|---|---|---|
| *4* | 103 | 106 | 3 |
| *5* | 100 | 106 | 6 |
| *6* | 96 | 106 | 10 |
| *7* | 96 | 106 | 10 |

The provision of an incompatibility window of 3°C to 10°C is acceptable, as it is sufficiently broad to enable low pressure sealing to be performed without minor fluctuations in heat seal temperature resulting in the naked collation film being sealed to the filmic wraps of the individual packages in the bundles.

## Claims

1. A method for forming a naked collation package comprising:
a. providing an arrangement of packages individually wrapped in a filmic material;
b. providing a naked collation film for nakedly wrapping said individually wrapped packages, the naked collation film comprising a polyolefinic core layer C, an inner sealing layer A on the inner surface of the naked collation film and a polyolefinic outer sealing layer B on the outer surface of the naked collation film, the material of the inner sealing layer A being selected for sealing incompatibility with the filmic material of the individually wrapped packages under a specified sealing condition and heat shrinking condition, and the polyolefinic material of the outer sealing layer B being selected for sealing compatibility with B and for sealing compatibility with A under the specified sealing condition, wherein layers A and B are formed of different materials and layer B comprises at least one polyolefinic polymer and an antiblock component comprising at least 0.2% by weight of the layer of silicone;
c. arranging the individually wrapped packages in an ordered configuration;
d. arranging the naked collation film such that it at least partially surrounds, although is not necessarily in contact with, the ordered configuration of individually wrapped packages; and
e. heat shrinking the naked collation film by exposing it to the heat shrinking condition, causing the naked collation film to shrink and closely surround the arrangement of packages, without being sealed to the packages.

2. The process of Claim 1, wherein the film can form a seal between layers A and A, A and B and/or B and B at a temperature of 80°C or lower.

3. The process of Claim 1 or 2, wherein the outer layer also comprises silica in an amount of between 0.1 to 0.4% by weight of the layer.

4. The process of any one of Claims 1 to 3 wherein the heat shrinking condition comprises a heat shrink temperature of between 50 and 200°C.

5. The process of any one of Claims 1 to 4, further comprising one or more of the following steps, which can be performed before or after any of steps a) to d), if appropriate:
a-1) forming a film tube with overlapping edges;
a-2) forming a girth seal by sealing together the overlapping edges of a film tube;
a-3) forming envelope seals at each end of the package by folding in a film tube and sealing the folded ends.

6. The process of Claim 5,
wherein step a-1) is performed by wrapping the naked collation film around the ordered configuration of individually wrapped packages to form a film tube, and/or
wherein the girth seal formed in step a-2) is formed between layers A and B, and/or
wherein the envelope seals formed in step a-3) are formed B to B and/or A to B and/or A to A, and combinations of two or more thereof.

7. The process of any one of Claims 1 to 6,
wherein the naked collation film exhibits a wide angle haze and/or a narrow angle haze of about 3.0% or lower, and/or
wherein the naked collation film exhibits a gloss (45°) of about 95% or higher.

8. The process of any one of Claims 1 to 7,
wherein the naked collation film is capable of forming a seal between the or each sealing layer to itself and/or to the other sealing layer having a seal strength of 200g/25mm following a sealing operation at 90°C or lower, at a pressure of 5psi and a dwell time of 0.5s, and/or
wherein the naked collation film is capable of forming a seal between the or each sealing layer to itself and/or to the other sealing layer having a seal strength of 200g/25mm following a sealing operation at 80°C or lower, at a pressure of 5psi and a dwell time of 0.5s.

9. The process of any one of Claims 1 to 8,
wherein the naked collation film exhibits a static and/or dynamic coefficient of friction at ambient temperatures of about 0.5 or lower and/or
wherein the naked collation film exhibits a static and/or dynamic coefficient of friction at 60°C of about 1 or lower and/or
wherein the naked collation film exhibits a static and/or dynamic coefficient of friction at 80°C of about 4 or lower.

10. The process of any one of Claims 1 to 9, wherein layers A and/or B comprise a blend of polyolefinic copolymers, optionally wherein one of the polyolefinic copolymers is a copolymer of propylene and ethylene or butene.

11. The process of Claim 10, wherein one of the polyolefinic copolymers is a terpolymer of propylene, ethylene and butene.

12. The process of any one of Claims 1 to 11, wherein the antiblock component comprises silica and/or silicates.

13. The process of any one of Claims 1 to 12,
wherein the seal initiation temperature of the or each sealing layer of the naked collation film to itself and/or to the other sealing layer of the naked collation film is at least 15°C lower than the heat seal threshold of the said sealing layer to the filmic material of the individual packages, or
wherein the seal initiation temperature of the or each sealing layer of the naked collation film to itself and/or to the other sealing layer of the naked collation film is at least 10°C lower than the heat seal threshold of the said sealing layer to the filmic material of the individual packages.

14. A naked collation package comprising an arrangement of individual packages, individually packaged in a filmic material, that are packed together in said naked collation package in a naked collation film, wherein the naked collation film comprises a polyolefinic core layer C, an inner sealing layer A on the inner surface of the naked collation film and a polyolefinic outer sealing layer B on the outer surface of the naked collation film, the material of the inner sealing layer A being selected for sealing incompatibility with the filmic material of the individually wrapped packages under a specified sealing condition and heat shrinking condition, and the polyolefinic material of the outer sealing layer B being selected for sealing compatibility with B and for sealing compatibility with A under the specified sealing condition, wherein layers A and B are formed of different materials and layer B comprises at least one polyolefinic polymer and an antiblock component comprising at least 0.2% by weight of the layer of silicone; the individual packages being arranged in an ordered configuration and the naked collation film having been heat shrunk to closely surround the arrangement of packages, without being sealed to the packages.

15. The naked collation package of Claim 14,
wherein the film can form a seal between layers A and A, A and B and/or B and B at a temperature of 80°C or lower and/or
wherein the outer layer also comprises silica in an amount of between 0.1 to 0.4% by weight of the layer and/or
wherein the heat shrinking condition comprises a heat shrink temperature of between 50 and 200°C.
